# EUROPEAN PATENT APPLICATION

(11) **EP 4 239 478 A1**
(43) Date of publication of application: **06.09.2023**
(21) Application number: 23155822.2
(22) Date of filing: 09.02.2023
(51) Int. Cl.: G06F 9/50, G06N 5/02

(54) **DECOUPLING ONTOLOGIES IN DISTRIBUTED DATA MESH**

(30) Priority: 09.02.2022 PL 44033822; 08.02.2023 US 202318166304
(71) Applicant: Accenture Global Solutions Limited, Dublin 4 (IE)
(72) Inventor: KLEIN, Dan, 4856111 Rosh Ha'ayin (IL); HADAR, Eitan, 02 3686210 Nesher (IL); GLOWINA, Anna, 30-399 Kraków (PL)
(74) Representative: Swindell & Pearson Limited

(57) **Abstract**

Implementations include systems and methods for decoupling ontologies in distributed data mesh. A computer-implemented method includes obtaining imported information indicating computational resources, requested analyses, and data ontology; creating, from the imported information, a knowledge graph as a computer-readable data structure including nodes and connections between the nodes, the nodes including: data nodes, each data node representing a computational resource, analysis nodes, each analysis node representing a requested analysis, and ontology nodes, each ontology node representing an axiom of the data ontology; generating, from the knowledge graph, a functional data mesh as a computer-readable data structure that identifies computational resources to perform the requested analyses; validating states of the functional data mesh to determine a recommended configuration; and exporting a distributed data mesh based on the recommended configuration.

## Description

### CROSS-REFERENCE TO RELATED APPLICATIONS

This application claims priority to Polish Pat. App. No. P.440338 filed on February 9, 2022, the disclosure of which is expressly incorporated herein by reference in the entirety.

### BACKGROUND

As trusted digital information flow and derived insights become more important, the challenge of managing data at scale is evident. Rapid acceleration of data- and analytics-driven solutions for enterprises is complicated by the variety and volume of data sources and the existence of multiple methods for data consumption and utilization. Organizations use many data architecture approaches to handle the above challenges such as centralized, edge, data mesh, peer-to-peer, and others.

### SUMMARY

Implementations of the present disclosure are directed to systems and methods for analytics driven decoupling over ontologies in distributed data mesh. In distributed data environment the main goal is to understand and design computation grid data mesh. An analytics-driven decoupling over ontologies model provides framework to construct such context. The model recommends which data node is expected to run which analysis in an optimal combination and allows to export a semantic model which supports knowledge graph creation and analysis on planned data node.

The result of is a compacted model of discovering recommended data mesh layout and its artifacts. The model enables the identification of relations between analysis and recognition of subset and composite analysis. The model also enables identification of required axioms from ontology, identification of recommended skeleton of data mesh supporting functional requirements, and identification of synchronization strategy in data mesh.

Implementations of the present disclosure include actions of obtaining imported information indicating computational resources, requested analyses, and data ontology; creating, from the imported information, a knowledge graph as a computer-readable data structure including nodes and connections between the nodes, the nodes including: data nodes, each data node representing a computational resource, analysis nodes, each analysis node representing a requested analysis, and ontology nodes, each ontology node representing an axiom of the data ontology; generating, from the knowledge graph, a functional data mesh as a computer-readable data structure that identifies computational resources to perform the requested analyses; validating states of the functional data mesh to determine a recommended configuration; and exporting a distributed data mesh based on the recommended configuration.

Other implementations of this aspect include corresponding systems, apparatus, and computer programs, configured to perform the actions of the methods, encoded on computer storage devices.

These and other implementations can optionally include one or more of the following features: the knowledge graph represents a default state of a data mesh; generating the functional data mesh that identifies computational resources to perform the requested analyses includes assigning at least one data node to each analysis node; a connection between a data node and an analysis node indicates that the computational resource represented by the data node performs the analysis represented by the analysis node. a connection between an analysis node and an ontology node indicates that the analysis represented by the analysis node is performed using the axiom represented by the ontology node; axioms of the data ontology include classes, relations, and properties; generating the functional data mesh includes applying one or more rules to identify a set of computational resources to support the requested analyses; validating the states of the functional data mesh comprises removing redundant data nodes from the functional data mesh; the functional data mesh comprises, for each analysis node, a direct or indirect connection to at least one data node; validating the states of the functional data mesh comprises optimizing a cost function of the functional data mesh; the distributed data mesh includes connections between ontology nodes and analysis nodes; the distributed data mesh includes a minimal ontology to support the requested analyses; exporting the distributed data mesh comprises outputting a digital twin of the distribute data mesh to a runtime environment; the functional data mesh includes a subset of the data nodes of the knowledge graph.

The present disclosure also provides a computer-readable storage medium coupled to one or more processors and having instructions stored thereon which, when executed by the one or more processors, cause the one or more processors to perform operations in accordance with implementations of the methods provided herein.

The present disclosure further provides a system for implementing the methods provided herein. The system includes one or more processors, and a computer-readable storage medium coupled to the one or more processors having instructions stored thereon which, when executed by the one or more processors, cause the one or more processors to perform operations in accordance with implementations of the methods provided herein.

It is appreciated that methods in accordance with the present disclosure can include any combination of the aspects and features described herein. That is, methods in accordance with the present disclosure are not limited to the combinations of aspects and features specifically described herein, but also include any combination of the aspects and features provided.

The details of one or more implementations of the present disclosure are set forth in the accompanying drawings and the description below. Other features and advantages of the present disclosure will be apparent from the description, the drawings, and the claims.

### DESCRIPTION OF DRAWINGS

FIG. 1 depicts an example architecture that can be used to execute implementations of the present disclosure.
FIG. 2 depicts an example process for joining ontology and data mesh in accordance with implementations of the present disclosure.
FIG. 3A and 3B depict an example architecture that can be used for decoupling ontology in accordance with implementations of the present disclosure.
FIG. 4 depicts an example of interlacing in accordance with implementations of the present disclosure.
FIG. 5A depicts an example of optimization in accordance with implementations of the present disclosure.
FIG. 5B depicts a recommendation matrix in accordance with implementations of the present disclosure.
FIG. 6 depicts a schema visualization of an analytics knowledge graph in accordance with implementations of the present disclosure.
FIG. 7 depicts a data mesh graph in accordance with implementations of the present disclosure.
FIG. 8 depicts an example process for data mesh cycle management in accordance with implementations of the present disclosure.
FIG. 9 is a flow diagram of an example process for decoupling ontologies in distributed data mesh in accordance with implementations of the present disclosure.

Like reference symbols in the various drawings indicate like elements.

### DETAILED DESCRIPTION

Implementations of the present disclosure are directed to systems and methods for analytics driven decoupling over ontologies in distributed data mesh. In distributed data environment the main goal is to understand and design computation grid data mesh. An analytics-driven decoupling over ontologies model provides framework to construct such context. The model recommends which data node is expected to run which analysis in an optimal combination and allows to export a semantic model which supports knowledge graph creation and analysis on planned data node.

The result of is a compacted model of discovering recommended data mesh layout and its artifacts. The model enables the identification of relations between analysis and recognition of subset and composite analysis. The model also enables identification of required axioms from ontology, identification of recommended skeleton of data mesh supporting functional requirements, and identification of synchronization strategy in data mesh.

The disclosed implementations can result in the following advantages. The disclosed techniques can be implemented to automatically generate an efficient distributed data mesh for performing requested analyses. The distributed data mesh includes only the data nodes needed to perform the analyses. The distributed data mesh includes only the ontology nodes needed to support the analyses. Thus, the distributed data mesh is optimized for efficiency. By performing analyses using the distributed data mesh, the amount of data imported is limited to the minimal amount of data needed to perform the analyses. Thus, the amount of memory required for storing the imported data is reduced. Additionally, the amount of data communicated between data nodes is reduced, reducing the amount of bandwidth required between the data nodes. Data is stored only at the data nodes that need the data to perform analyses, which reduces duplication of data elements. Once a distributed data mesh is generated for a set of analyses, the distributed data mesh can be implemented repeatedly. Thus, the distributed data mesh does not need to be regenerated. When a change is to be made to the requested analyses, to infrastructure, or to data elements, the distributed data mesh can be automatically adjusted to account for the change. The distributed data mesh can therefore be iteratively adjusted over time, improving update speed and reducing the processing power used to create and maintain the distributed data mesh. Updates can be made incrementally, thereby improving reliability and reducing interruptions to operations. When the distributed data mesh is deployed, each data node of the distributed data mesh operates autonomously and independent of other data nodes. This improves data security and reduces communication between data nodes. The disclosed techniques automatically apply restrictions according to rules and policies. Thus, data security is improved.

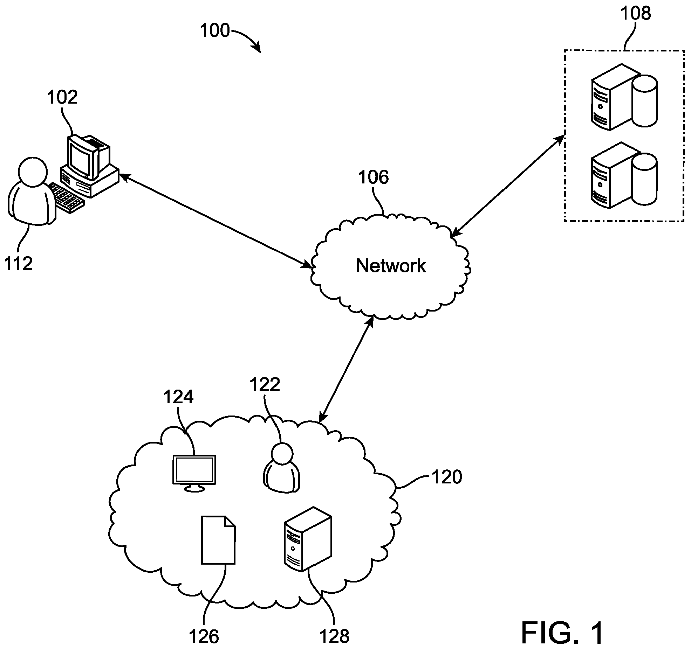

FIG. 1 depicts an example architecture 100 in accordance with implementations of the present disclosure. In the depicted example, the example architecture 100 includes a client device 102, a network 106, and a server system 108. The server system 108 includes one or more server devices and databases (e.g., processors, memory). In the depicted example, a user 112 interacts with the client device 102.

In some examples, the client device 102 can communicate with the server system 108 over the network 106. In some examples, the client device 102 includes any appropriate type of computing device such as a desktop computer, a laptop computer, a handheld computer, a tablet computer, a personal digital assistant (PDA), a cellular telephone, a network appliance, a camera, a smart phone, an enhanced general packet radio service (EGPRS) mobile phone, a media player, a navigation device, an email device, a game console, or an appropriate combination of any two or more of these devices or other data processing devices. In some implementations, the network 106 can include a large computer network, such as a local area network (LAN), a wide area network (WAN), the Internet, a cellular network, a telephone network (e.g., PSTN) or an appropriate combination thereof connecting any number of communication devices, mobile computing devices, fixed computing devices and server systems.

In some implementations, the server system 108 includes at least one server and at least one data store. In the example of FIG. 1, the server system 108 is intended to represent various forms of servers including, but not limited to a web server, an application server, a proxy server, a network server, and/or a server pool. In general, server systems accept requests for application services and provide such services to any number of client devices (e.g., the client device 102 over the network 106). In accordance with implementations of the present disclosure, and as noted above, the server system 108 can host an agile security platform.

In the example of FIG. 1, an enterprise network 120 is depicted. The enterprise network 120 represents a network implemented by an enterprise to perform its operations. In some examples, the enterprise network 120 represents on-premise systems (e.g., local and/or distributed), cloud-based systems, and/or combinations thereof. In some examples, the enterprise network 120 includes IT systems and OT systems. In general, IT systems include hardware (e.g., computing devices, servers, computers, mobile devices) and software used to store, retrieve, transmit, and/or manipulate data within the enterprise network 120. In general, OT systems include hardware and software used to monitor and detect or cause changes in processes within the enterprise network 120 as well as store, retrieve, transmit, and/or manipulate data. In some examples, the enterprise network 120 includes multiple assets. Example assets include, without limitation, users 122, computing devices 124, electronic documents 126, and servers 128.

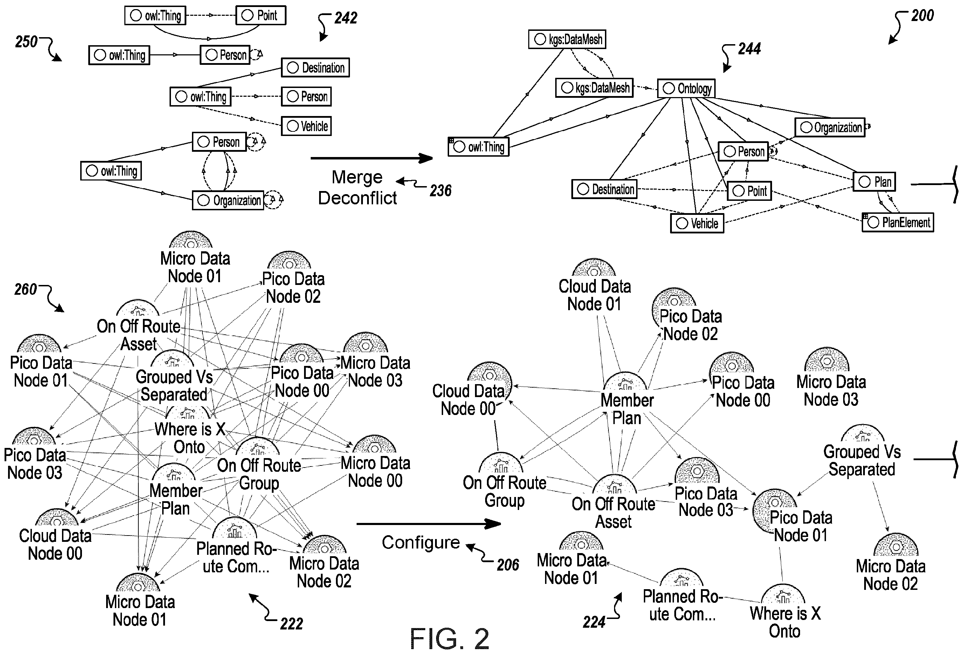

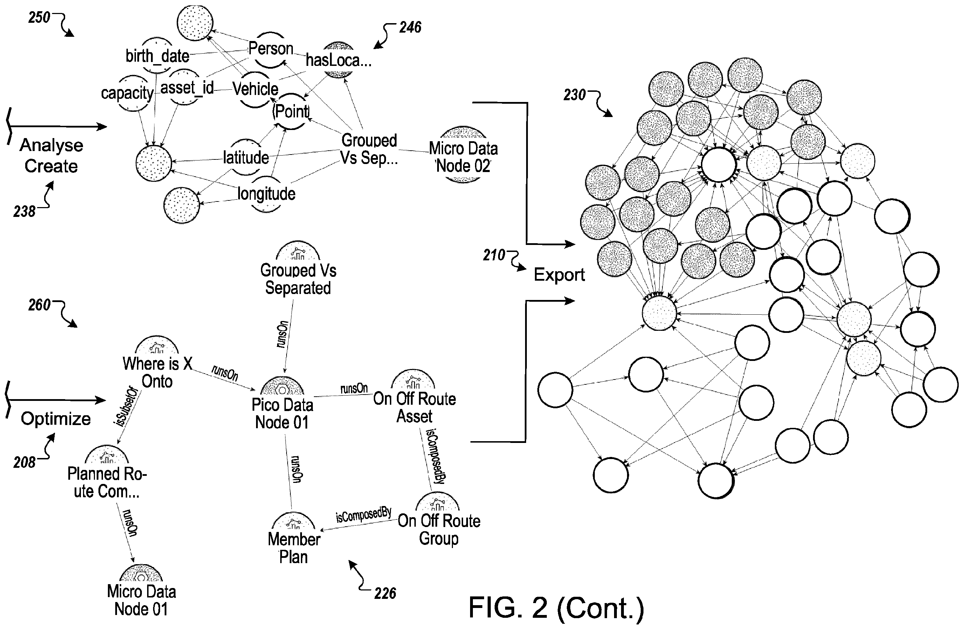

A knowledge graph can be provided a computer-readable data structure including nodes and connections, or edges, between the nodes. The nodes can include data nodes, analysis nodes, and ontology nodes. A connection between a data node and an analysis node indicates that the computational resource represented by the data node can perform the analysis represented by the analysis node. A connection between an analysis node and an ontology node indicates that the analysis represented by the analysis node can be performed using the axiom represented by the ontology node. In FIGS. 2, 4, and 5, data nodes are generally represented as circles with darker shading, analysis nodes are represented as circles with lighter shading, and ontology nodes are represented as circles with no shading.

FIG. 2 depicts an example process 200 for joining ontology and data mesh in accordance with implementations of the present disclosure. For an analysis to be performed, the analysis requires a computational resource to perform the analysis, and data on which to run the analysis. The process 200 includes two subprocess. Subprocess 250 includes steps for creating an ontology graph including ontology bundles representing data structures for use in data analytics. Subprocess 260 includes steps for creating a recommended data mesh of data nodes to perform data analytics. The ontology graph and the recommended data mesh are combined and exported as a distributed data mesh.

The subprocess 250 includes a merge and deconflict step 236. During the merge and deconflict step 236, a modular ontology 242 is used to create a composite ontology 244. The modular ontology 242 includes reusable blocks representing basic data concepts. The composite ontology 244 includes multiple merged modular ontologies. The composite ontology 244 includes deconflicted schema that represents all domain concepts of the modular ontologies 242.

The subprocess 250 includes an analyze and create step 238. During the analyze and create step 238, ontology bundles 246 are created. An ontology bundle 246 includes a subset of ontology axioms that can allow analysis to be performed on a data node. Axioms of the ontology bundle 246 can include classes, relations, and properties. Thus, ontology nodes can include class nodes, relation nodes, and property nodes.

The ontology bundle 246 includes connections between analysis nodes and ontology nodes, representing that the axiom represented by the ontology node is needed to perform the analysis represented by the analysis node.

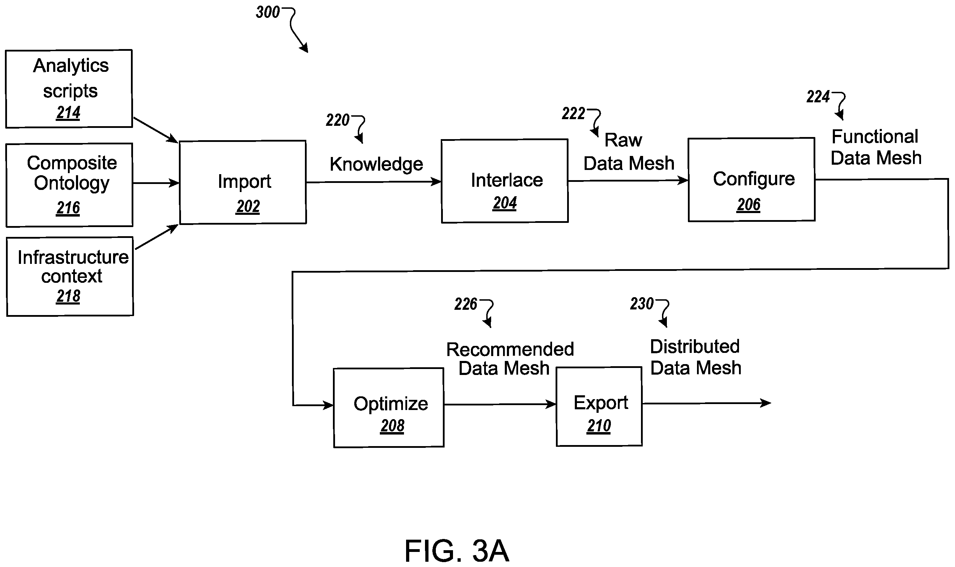

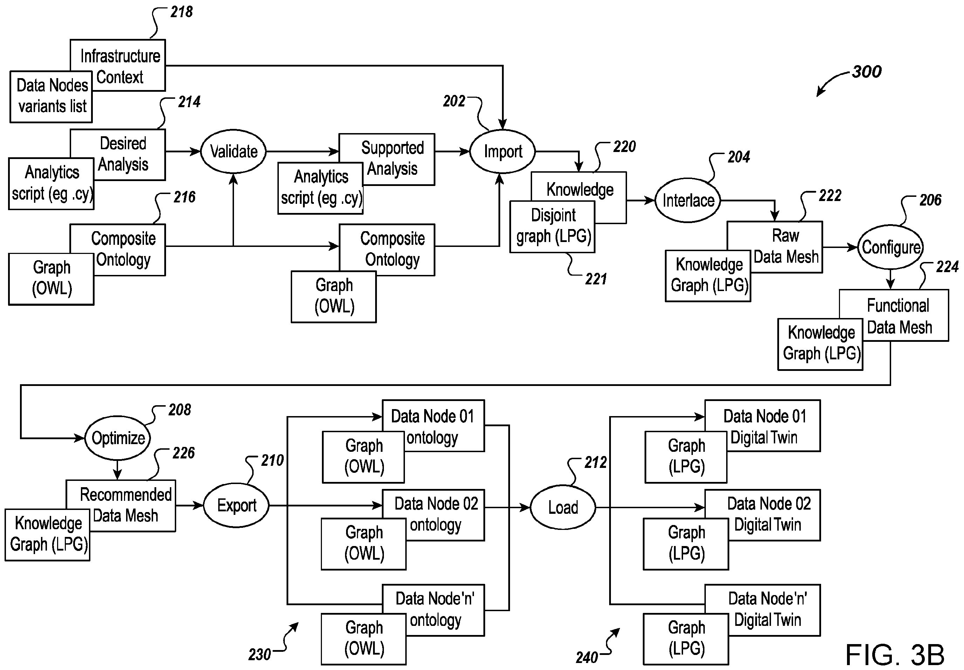

The subprocess 260 is used to generate a recommended data mesh 226. The subprocess 260 includes performing configuration 206 of a raw data mesh 222 to generate a functional data mesh 224. The subprocess 260 includes performing optimization 208 of the functional data mesh 224 to generate the recommended data mesh 226. The recommended data mesh 226 includes connections between analysis nodes and data nodes, representing that the analysis represented by the analysis node is to be performed by the computational resource represented by the data node. The subprocess 260 is described in greater detail with reference to FIGS. 3A and 3B.

The subprocess 250 and the subprocess 260 are joined in the export step 210, during which connections are formed between the ontology bundles 146 and data nodes of the recommended data mesh 226. In some examples, one or more ontology bundles can be connected to the same data node. Connections between data nodes and ontology nodes are made through analysis nodes representing the analyses to be performed. For example, a first ontology node can be connected to a first analysis node in the ontology bundle 246. The first analysis node can be connected to the first data node in the recommended data mesh 226. Thus, in the resulting distributed data mesh 230, the first ontology node is connected to the first data node via the first analysis node.

The result of the export step 210 is a distributed data mesh 230 that can be implemented in a runtime environment. The distributed data mesh 230 includes a semantic graph data model of the requested analyses, data nodes to perform the analyses, and data ontology for the data on which the analyses is to be run. The distributed data mesh 230 includes a minimal ontology to support the requested analyses. The distributed data mesh 230 can be loaded as a digital twin in a runtime environment.

FIGS. 3A and 3B depict an example process 300 that can be used for decoupling ontology in accordance with implementations of the present disclosure. In general, based on chosen analytics, available infrastructure and compatible composite ontology, the process 300 is implemented to define which node is expected to run which analysis in an efficient combination. The process 300 is configured to determine a distributed data mesh 230 to support the requested analytics on data nodes. Once the distributed data mesh 230 is defined, each data node can operate independently and autonomously to access the necessary data and execute the analyses.

The example process 300 of decoupling ontology is a chain of operations for data node ontology generation. The process 300 includes five operations orchestrated in linear process which results in a distributed data mesh architecture with recognized computation grid and set of ontology bundles designed for each specific data node inside the data mesh. The operations include steps of import 202, interlace 204, configure 206, optimize 208, and export 210. The result of such actions is distributed data mesh 230 representing a semantic graph model customized for defined data nodes. FIG. 3A shows a higher level view of the process 300, while FIG. 3B shows the process 300 in greater detail.

An analytics knowledge graph (AKG) is a result of importing and interlacing three knowledge elements. The elements include infrastructure context 218 (e.g., information about default infrastructure settings, available data nodes capabilities). The elements include analytics scripts 214 specifying a desired analysis set (e.g., information about analytics script which should be part of data mesh). The elements include a composite ontology 216 (e.g., a definition of schema, formal naming and definitions of categories, properties and relation between these concepts).

During the import step 202, information is uploaded about the infrastructure context 218, analytics scripts 214, and composite ontology 216. The result is knowledge 220 represented in a disjoint graph 221. The disjoint graph 221 includes a set of nodes representing analysis, computational resources, and internally connected domain ontology axioms. A computational resource provides computing power. Axioms are statements that are asserted to be true in the domain being described. The set of nodes includes analysis nodes that each represent an analysis, data nodes that each represent a computational resource, and ontology nodes that each represent an axiom of the data ontology.

The disjoint graph 221 can be a labeled property graph (LPG). An LPG is a type of graph database. In LPG-style databases the graph is comprised of nodes and relationships. Each node or relationship has an ID tag, one or more "labels" describing its type or class, and a set of "properties" that present values and a corresponding key to allow referencing. Nodes can be joined by a connection representing a relationship between the nodes, to form the larger structure of the graph.

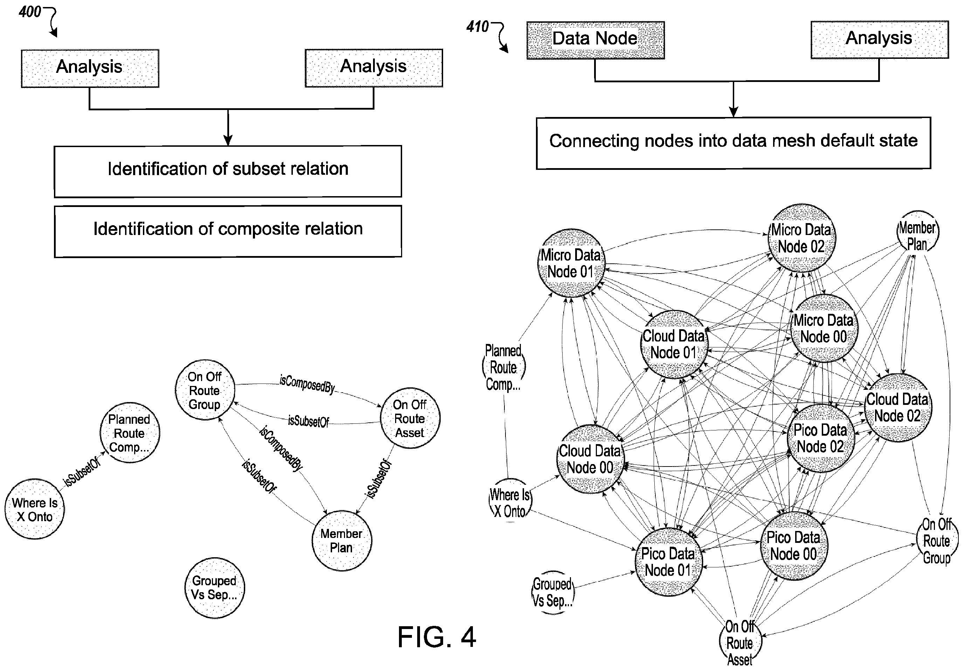

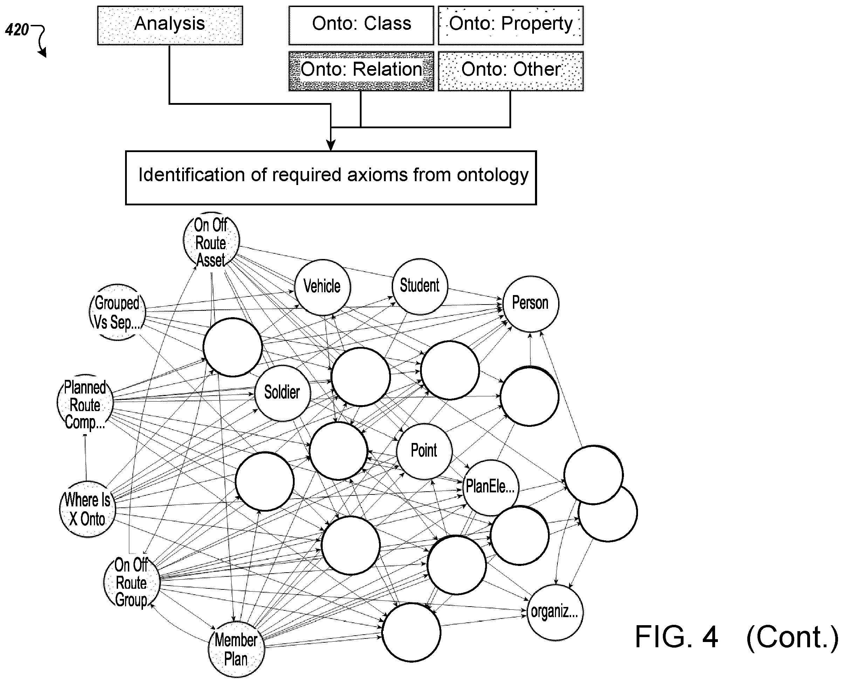

During the interlace step 204, sources of information are connected to create a knowledge graph instance that represents a default, raw state of data mesh (e.g., raw data mesh 222). The knowledge 220 represented by the disjoint graph 221 is used to generate the raw data mesh 222. The raw data mesh 222 is a fully connected graph, with analysis nodes connected to any data nodes that represent computational resources that are available to perform the analysis. A connection between a data node and an analysis node can represent, for example, that the computational resource represented by the data node has sufficient processing power to perform the analysis represented by the analysis node. The configuration of the raw data mesh 222 depended on predefined infrastructure of computational resources. The interlace step 204 is described in greater detail with reference to FIG. 4.

During the configure step 206, rules and constraints can be implemented to reduce the number of data nodes that support the requested analyses. The configuration step 206 is applied to limit the connections of analysis nodes to data nodes within data mesh. Both manual and automated rules for running analytics on data nodes can be implemented.

Configuration 206 can include applying restrictions that may be based on data policies and guidelines. For example, a particular analysis may be required to run locally instead of remotely (e.g., due to data security or sensitivity standards). Thus, connections between the particular analysis and data nodes representing remote computational resources may be removed during configuration 206. Thus, during configuration 206, connections between analysis nodes and data nodes may be removed based on the restrictions. After performing configuration, each analysis node is connected to at least one data node, and can be connected to more than one data node.

The configuration step 206 generates a functional data mesh 224 by applying rules to identify a set of computational resources to support the requested analyses. The functional data mesh 224 is a computation grid which identifies a list of infrastructure elements and identifies computational resources at which analysis can be triggered. The functional data mesh 224 includes, for each analysis node, a direct or indirect connection to at least one data node. The functional data mesh 224 includes a subset of the data nodes of the raw data mesh 222.

During the optimize step 208, data nodes are removed from the functional data mesh 224 to generate a recommended data mesh 226. Optimization 208 includes removing data nodes that are not needed for deployment. The recommended data mesh 226 includes a single instance of the knowledge graph, with analysis nodes assigned to data nodes that are to execute the analysis.

The optimization step 208 validates the functional data mesh 224 for efficiency. All functional permutations of the functional data mesh 224 data mesh are checked from value perspective. As a result, an optimal configuration is returned as the recommended data mesh 226, which represents a minimal environment for running the requested analyses.

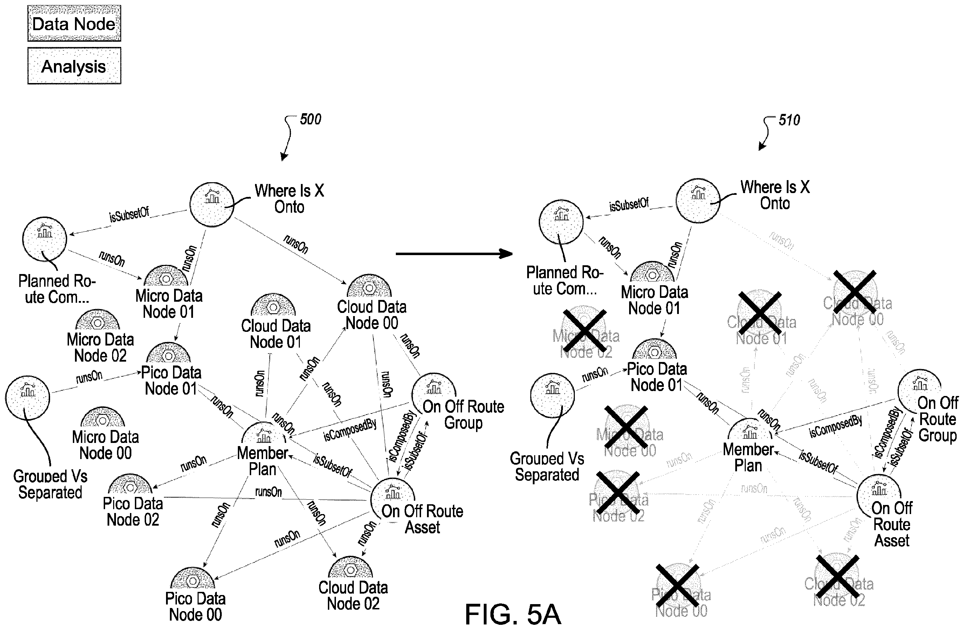

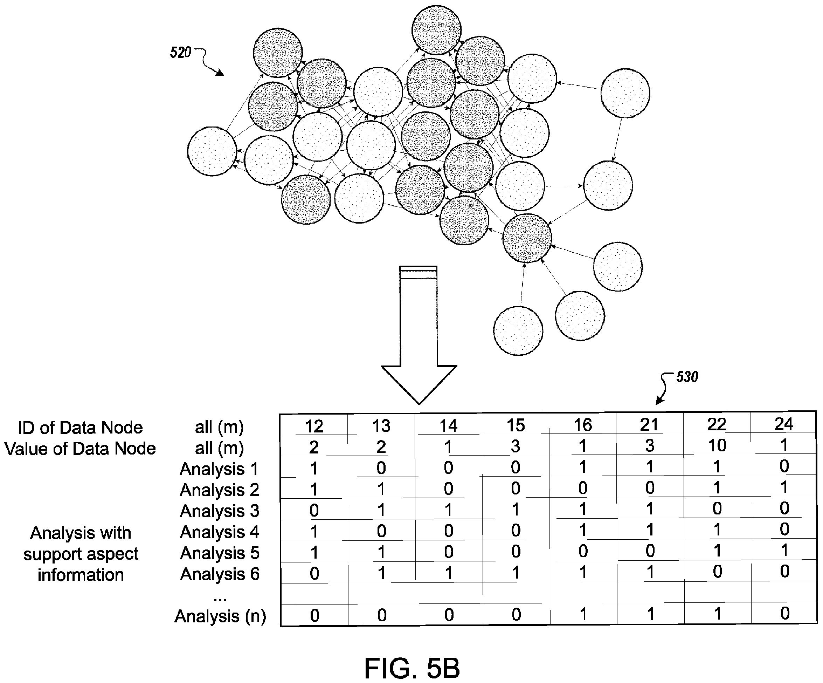

The optimization step 208 can optimize the functional data mesh 224 for any optimization function. The recommended data mesh 226 can include a selection of a subset of analyses to run over cloud resource, a subset of analyses to run locally, a subset of analyses to run on edge, a subset of analyses to run on frame, or any combination of these. The recommended data mesh 226 can specify, for each analysis, whether the analysis is to be performed locally or remotely. The optimize step 208 is described in greater detail with reference to FIGS. 5A and 5B.

During the export step 210, a distributed data mesh 230 is exported based on the configuration of the recommended data mesh 226. The export step 210 is based on the previous recognition of shared objects between analysis and ontology during the interlacing step 204. The exported distributed data mesh is functional, sound, and minimal.

To generate the distributed data mesh 230, the shortest path between all recognized axiom nodes can be used to identify a fully connected graph between the recommended data mesh 226 and the data ontology. The distributed data mesh 230 graph supports data type nodes and constraints attached to recognized classes, data properties, and object properties. In some examples, the distributed data mesh 230 is transformed into a resource description framework (RDF) graph.

Referring to FIG. 3B, the load step 212 is performed to load the distributed data mesh 230 to a runtime environment. The distributed data mesh 230 can be used to create a digital twin 240. The digital twin 240 includes individual data points connected with a semantic graph specific to the individual data nodes. The data nodes represented in the digital twin 240 each acts independently and autonomously within the data mesh grid.

FIG. 4 depicts an example of interlacing 204 in accordance with implementations of the present disclosure. Interlacing activity includes multiple operations. The operations include recognizing design of analysis (400), connecting analysis with data nodes (410), and connecting analysis with ontology (420). Identification of connections can be performed by regular expression to recognize pattern in analysis which matches object in ontology, by overlap similarity to identify similarity between analysis, and by default enabling running capability for all analytics on all data nodes.

Recognizing design of analysis (400) is performed to identify similarity between two or more analyses and a defining data tag. A similarity can include a subset relation between two or more analyses. A similarity can include a composite relation between two or more analyses.

Connecting analysis with data nodes (410) is performed to represent a default data mesh state. Data nodes are connected with analysis nodes to represent a default state of all analysis availability on data nodes. Each analysis can be run on multiple data nodes.

Connecting analysis with ontology (420) is performed to identify required data objects. The required minimal axioms are identified from the data ontology. The identified axioms are extracted from the ontology to enable to analyses to run on the required data. Analysis nodes are connected with the ontology nodes representing the required axioms for performing the analyses.

FIG. 5A depicts an example of optimization 208 in accordance with implementations of the present disclosure. Optimization includes optimizing a cost function of the functional data mesh. The cost function can be any for any appropriate parameter of the data mesh (e.g., financial cost, ease, complexity, logistics, time, geographic distance, computing power, availability, supported analysis, infrastructure). Optimization performed to choose a specific combination of nodes to create an optimized data mesh.

A cost oriented algorithm is used to compute the cost of a permutation of the functional data mesh that meets functional requirements. The cost oriented algorithm determines an optimal configuration to optimize for the selected parameter, while maintaining a connected graph. In a connected graph, every analysis node is connected to a data node on which the analysis is to be run, or is connected to an analysis node that has a data node parent.

Optimization includes performing graph overlapping analysis. Graph overlapping analysis is performed to identify a composition of a subset of the functional data mesh that optimizes the data mesh for the selected parameter. Overlapping, or redundant, data nodes, and their connections, are removed from the functional data mesh. For example, a particular analysis node can be connected to two different data nodes. A first data node can be selected for performing the particular analysis, using the optimization function. The second data node can be removed due to being a redundant data node.

Referring to FIG. 5A, graph 500 shows a portion of a functional data mesh including analysis nodes and data nodes. Graph 510 shows the portion of the functional data mesh with redundant data nodes removed. The removed redundant data nodes are shown in FIG. 5A as being crossed out with an "X."

FIG. 5B depicts a recommendation matrix 530 in accordance with implementations of the present disclosure. The recommendation algorithm includes using a matrix approach to identify the grid of computation and then checking whether removal of data nodes causes data mesh to be broken.

An analytics knowledge graph 520 can be transformed into a recommendation matrix. The shape of the matrix is (n, m), where n-2 represents functional conditions, and m represents a number of possible data nodes. The first row of the matrix is the list of ID nodes for all possible data nodes. The second row of the matrix is the list of value attribute associated with data nodes. Remaining rows represent functional condition for each analysis in Boolean vector pattern where 1 indicates that the analysis is supported on date node and 0 indicates the analysis is not supported. Composite or subset relations between analyses are represented as multiple conditions where parent analysis is added as one of possible functional conditions.

A functional combination is a combination of columns and data nodes from the original matrix which support the condition that all analysis rows related have at least one data node where they can be run. The recommendation list is a sorted list of values associated with functional combinations.

The optimization algorithm uses a value oriented function to identify the best data mesh topology. The function goal is to minimalize or maximize the value associated with each data node. Values can be defined as the cost of deploying data node, the percentage of agreed availability, the size of data elements set needed to be available locally to run analysis, or other user defined metrics.

For example, a first approach can be to intensify computation locally, and a data node value can be represented by set of data elements which are shared by analytics associated with the data node. In essence, analytics can be executed over a data node that contains most the data elements it needs, and minimal amount of remote data nodes. It uses a classical automatic clustering algorithm that splits the number and type of data nodes (a cluster) and assigns which data elements and analytics can run on each cluster (the group members of the cluster). The change to the algorithm is that it first clusters analytics that do not use other analytics to be executed.

An example is: A1 is using A2 and A3 and Data4. A3 is using Data1 and Data2. A2 is using Data2 and Data3. As such, one clustering solution (result of the Data Mesh optimization component) can be: DataNode2 contains Data2, Data3, and A2; DataNode3 contains Data1, Data2 (with sync policy needed with DataNode2), and A3; and DataNode1 contains Data4 and A1 (with sync policy to A3 and A2). An alternative solution can be to switch the location of Data2 between DataNode2 and DataNode3, and to figure out the sync policy)

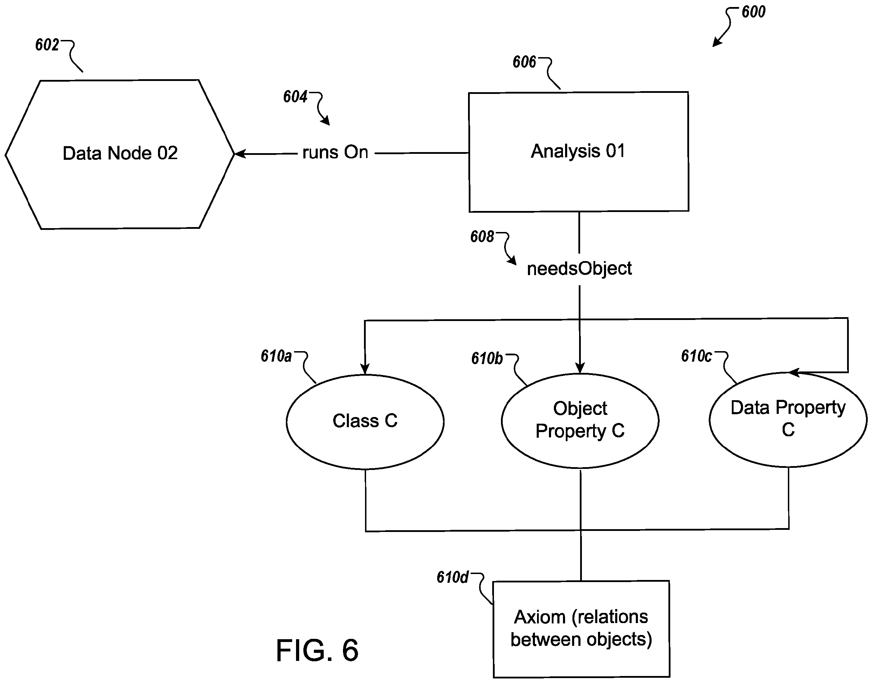

FIG. 6 depicts a schema visualization 600 of an analytics knowledge graph in accordance with implementations of the present disclosure. Key elements in analytics knowledge graphs include: vertex type (e.g., analysis node 606, data node 602, ontology nodes 610a, 610b, 610c, 610d) and edge type (e.g., runsOn edge 604, needsObject edge 608).

Key elements include an analysis vertex (e.g., analysis node 606), which represents analytics and holds important attributes. Attributes include code (e.g., analytics script in string format), and data tag. Each analytics is validated against predefined rules to identify its main scope (e.g., telemetry, personal data oriented etc.).

Key elements include data node vertex (e.g., data node 602), which represents the infrastructure dimension and holds information about value (defined as abstract measure of algorithm focus e.g., computation power, cost, size, availability), type, and location (definition of size, server localization) of computational resources.

Key elements include ontology components vertex (e.g., ontology nodes 610a, 610b, 610c, 610d). The ontology nodes represent elements of ontology, classes, restrictions, object and data properties.

Key elements include runsOn edge 604, which represents relations between analysis and data node. The runsOn edge 604 enriches model by information about possible sources of analysis triggering.

Key elements include needsObject edge 608, which represents relations between analysis and semantic layer (e.g., ontology components). Through interlacing step, the graph connects ontology axioms with analysis by semantic code review.

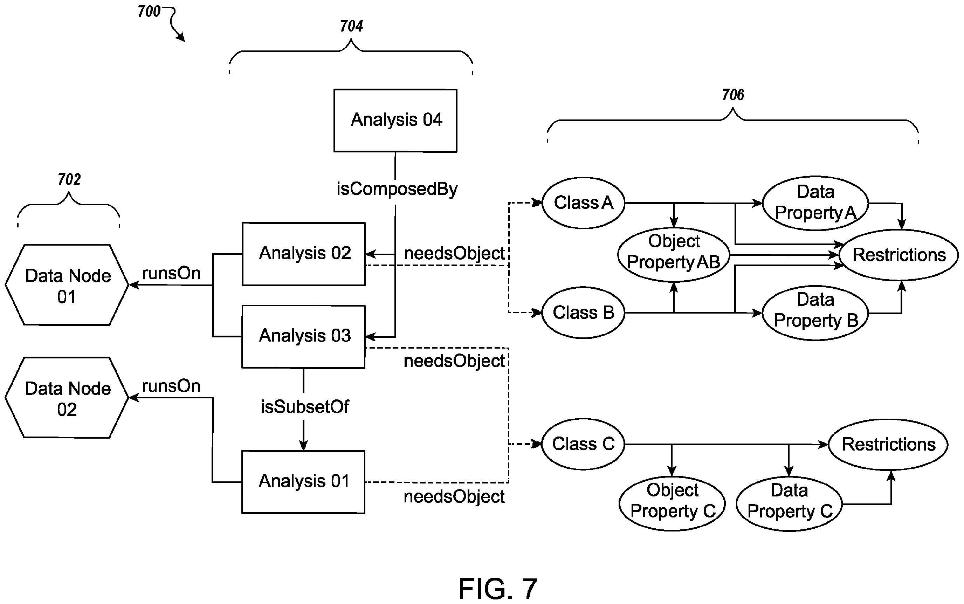

FIG. 7 depicts a data mesh graph 700 in accordance with implementations of the present disclosure. The result of analytic driven decoupling over ontologies in distributed data mesh is a computation grid with associated structures represented by ontology nodes 706. The structures are subsets of a domain ontology which represents the objects needed for analyses 704 to run, and their internal interconnectivity. The data mesh graph 700 specifies the data nodes 702 on which the structures are to be loaded in order to support the analyses 704. The data mesh graph 700 specifies the analyses 704 to be performed by each data node 702.

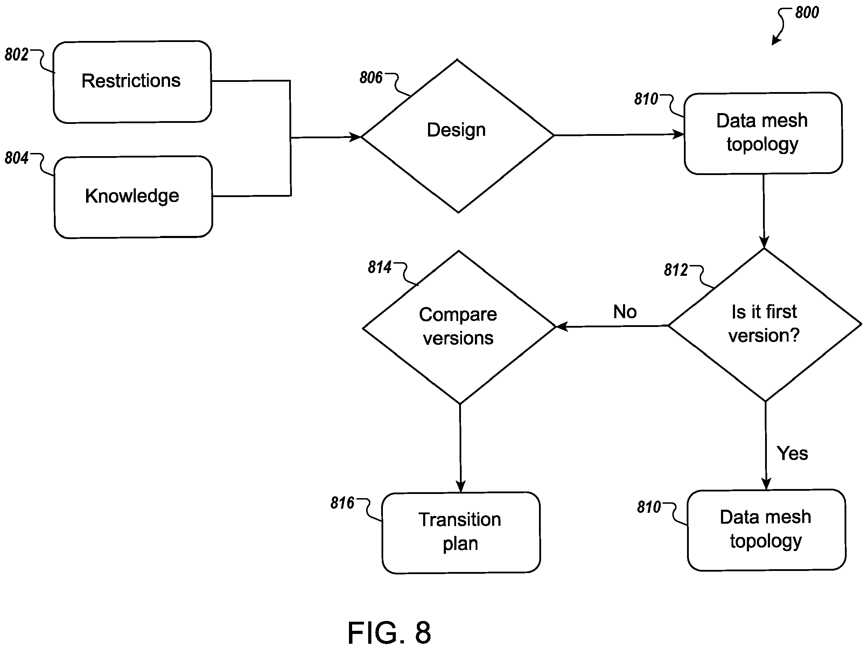

FIG. 8 depicts an example process 800 for data mesh cycle management in accordance with implementations of the present disclosure. The process of creating a data mesh with its artifacts has cyclic nature. The framework allows adding and removing elements, and changing existing elements. The framework permits recalculation of a data mesh solution, without regenerating the data mesh.

The process 800 includes obtaining knowledge 804 related to data mesh requirements, and restrictions 802 for implementing the data mesh. The knowledge 804 can include information related to design ontology, such as knowledge generated from domain discovery and modeling.

The process 800 includes using the knowledge 804 and restrictions to design 806 the data mesh topology 810. Designing 806 the data mesh topology can include joining ontology and data meshes as described with reference to FIGS. 2 to 5. The data mesh topology 810 includes a data mesh architecture construction with validated and optimized data nodes.

The process 800 includes determining whether the data mesh topology 810 is a first version 812. If the data mesh topology 810 is the first version, the data mesh topology 810 can be exported. If the data mesh topology 810 is not the first version, the process 800 includes comparing 814 the data mesh topology 810 with a previous version to identify changes. The comparison 814 is performed between two versions of the data mesh: the existing topology and the topology after change implementation.

Examples of a change between data mesh topologies can include adding or removing a data node, adding or removing an analysis node, adding or removing an ontology node. An example change can include adding or removing a modular ontology, an ontology bundle, or a single axiom. An example change can include adding or removing a configuration.

When a change is made to the data mesh topology, the framework provides a new solution with a transition plan 816 from the current state to the new state. A transition plan 816 includes a list of changes needed to be applied. The transition plan 816 is based on the comparison 814.

When the data mesh topology is deployed, the data mesh topology can be monitored and evaluated through data catalog monitoring, data mesh assessment and reporting, and impact analysis and trend tracking. Analytics discovery can be performed to identify revised requirements. When revised requirements are identified, updated knowledge 804 and restrictions 802 can be incorporated to the design 806 to generate an updated data mesh topology.

The proposed approach is an intelligent, analytics driven decoupling processes. The framework enables refactoring the domain ontology. Axioms of the domain ontology can be split, extracted or moved axioms into new ontology based the need of analytics to be implemented. The process is automated, optimization-oriented, and scalable.

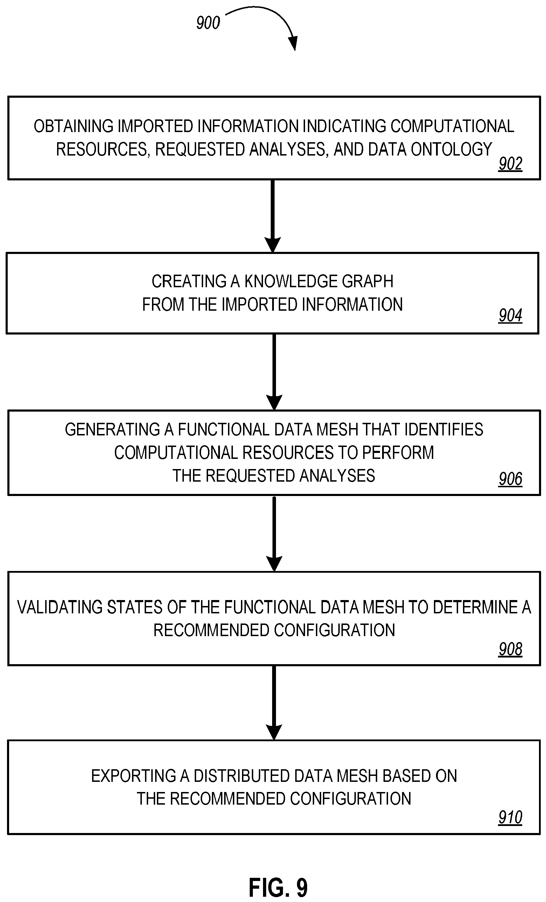

FIG. 9 is a flow diagram of an example process 900 for decoupling ontologies in distributed data mesh. The process 900 can be performed by a computing system such as the server system 108 of FIG. 1.

The process 900 includes obtaining imported information indicating computational resources, requested analyses, and data ontology (902).

The process 900 includes creating a knowledge graph from the imported information (904). The knowledge graph can be provided as a computer-readable data structure including nodes and connections between the nodes. The nodes can include data nodes, analysis nodes, and ontology nodes. A data node represents a computational resource. An analysis node represents a requested analysis. An ontology node represents an axiom of the data ontology. Axioms of the data ontology can include classes, relations, and properties.

A connection between a data node and an analysis node can indicate that the computational resource represented by the data node performs the analysis represented by the analysis node. A connection between an analysis node and an ontology node can indicate that the analysis represented by the analysis node is performed using the axiom represented by the ontology node.

In some examples, the knowledge graph represents a default state of a data mesh.

The process 900 includes generating a functional data mesh that identifies computational resources to perform the requested analyses (906). The functional data mesh is generated from the knowledge graph. In some examples, the functional data mesh is generated by assigning at least one data node to each analysis node. Generating the functional data mesh can include applying one or more rules to identify a set of computational resources to support the requested analyses.

The process 900 includes validating states of the functional data mesh to determine a recommended configuration (908). Validating the states of the functional data mesh can include removing redundant data nodes from the functional data mesh. In some examples, the functional data mesh includes a direct or indirect connection between each analysis node and at least one data node. Validating the states of the functional data mesh can include optimizing a cost function of the functional data mesh. In some examples, the functional data mesh includes a subset of the data nodes of the knowledge graph.

The process 900 includes exporting a distributed data mesh based on the recommended configuration (910). The distributed data mesh includes connections between ontology nodes and analysis nodes. In some examples, the distributed data mesh includes a minimal ontology to support the requested analyses. In some examples, exporting the distributed data mesh includes outputting a digital twin of the distribute data mesh to a runtime environment.

Once the digital twin is loaded to the runtime environment, the distributed data mesh can be reused to perform the requested analyses. For example, the requested analyses can be performed periodically, repeatedly, on-demand, or continuously. Updates to the distributed data mesh can be made when changes occur to the imported information such as the infrastructure context 218, the composite ontology 216, the analytics scripts 214, or any of these. When the imported information changes, the system can implement adjustments to the existing distributed data mesh in order to support the new information. In this way, adjustments can be made to an existing data mesh instead of reconstructing the data mesh. Thus, the distributed data mesh is updated without shutting systems down or interrupting analyses.

Implementations and all of the functional operations described in this specification may be realized in digital electronic circuitry, or in computer software, firmware, or hardware, including the structures disclosed in this specification and their structural equivalents, or in combinations of one or more of them. Implementations may be realized as one or more computer program products, i.e., one or more modules of computer program instructions encoded on a computer readable medium for execution by, or to control the operation of, data processing apparatus. The computer readable medium may be a machine-readable storage device, a machine-readable storage substrate, a memory device, a composition of matter effecting a machine-readable propagated signal, or a combination of one or more of them. The term "computing system" encompasses all apparatus, devices, and machines for processing data, including by way of example a programmable processor, a computer, or multiple processors or computers. The apparatus may include, in addition to hardware, code that creates an execution environment for the computer program in question (e.g., code) that constitutes processor firmware, a protocol stack, a database management system, an operating system, or a combination of one or more of them. A propagated signal is an artificially generated signal (e.g., a machine-generated electrical, optical, or electromagnetic signal) that is generated to encode information for transmission to suitable receiver apparatus.

A computer program (also known as a program, software, software application, script, or code) may be written in any appropriate form of programming language, including compiled or interpreted languages, and it may be deployed in any appropriate form, including as a standalone program or as a module, component, subroutine, or other unit suitable for use in a computing environment. A computer program does not necessarily correspond to a file in a file system. A program may be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program may be deployed to be executed on one computer or on multiple computers that are located at one site or distributed across multiple sites and interconnected by a communication network.

The processes and logic flows described in this specification may be performed by one or more programmable processors executing one or more computer programs to perform functions by operating on input data and generating output. The processes and logic flows may also be performed by, and apparatus may also be implemented as, special purpose logic circuitry (e.g., an FPGA (field programmable gate array) or an ASIC (application specific integrated circuit)).

Processors suitable for the execution of a computer program include, by way of example, both general and special purpose microprocessors, and any one or more processors of any appropriate kind of digital computer. Generally, a processor will receive instructions and data from a read only memory or a random access memory or both. Elements of a computer can include a processor for performing instructions and one or more memory devices for storing instructions and data. Generally, a computer will also include, or be operatively coupled to receive data from or transfer data to, or both, one or more mass storage devices for storing data (e.g., magnetic, magneto optical disks, or optical disks). However, a computer need not have such devices. Moreover, a computer may be embedded in another device (e.g., a mobile telephone, a personal digital assistant (PDA), a mobile audio player, a Global Positioning System (GPS) receiver). Computer readable media suitable for storing computer program instructions and data include all forms of non-volatile memory, media and memory devices, including by way of example semiconductor memory devices (e.g., EPROM, EEPROM, and flash memory devices); magnetic disks (e.g., internal hard disks or removable disks); magneto optical disks; and CD ROM and DVD-ROM disks. The processor and the memory may be supplemented by, or incorporated in, special purpose logic circuitry.

To provide for interaction with a user, implementations may be realized on a computer having a display device (e.g., a CRT (cathode ray tube), LCD (liquid crystal display), LED (light-emitting diode) monitor, for displaying information to the user and a keyboard and a pointing device (e.g., a mouse or a trackball), by which the user may provide input to the computer. Other kinds of devices may be used to provide for interaction with a user as well; for example, feedback provided to the user may be any appropriate form of sensory feedback (e.g., visual feedback, auditory feedback, or tactile feedback); and input from the user may be received in any appropriate form, including acoustic, speech, or tactile input.

Implementations may be realized in a computing system that includes a back end component (e.g., as a data server), or that includes a middleware component (e.g., an application server), or that includes a front end component (e.g., a client computer having a graphical user interface or a Web browser through which a user may interact with an implementation), or any appropriate combination of one or more such back end, middleware, or front end components. The components of the system may be interconnected by any appropriate form or medium of digital data communication (e.g., a communication network). Examples of communication networks include a local area network ("LAN") and a wide area network ("WAN") (e.g., the Internet).

The computing system may include clients and servers. A client and server are generally remote from each other and typically interact through a communication network. The relationship of client and server arises by virtue of computer programs running on the respective computers and having a client-server relationship to each other.

While this specification contains many specifics, these should not be construed as limitations on the scope of the disclosure or of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products.

A number of implementations have been described. Nevertheless, it will be understood that various modifications may be made without departing from the spirit and scope of the disclosure. For example, various forms of the flows shown above may be used, with steps reordered, added, or removed.

## Claims

1. A computer-implemented method executed by one or more processors and comprising:
obtaining imported information indicating computational resources, requested analyses, and data ontology;
creating, from the imported information, a knowledge graph as a computer-readable data structure including nodes and connections between the nodes, the nodes including:
data nodes, each data node representing a computational resource,
analysis nodes, each analysis node representing a requested analysis, and
ontology nodes, each ontology node representing an axiom of the data ontology;
generating, from the knowledge graph, a functional data mesh as a computer-readable data structure that identifies computational resources to perform the requested analyses;
validating states of the functional data mesh to determine a recommended configuration; and
exporting a distributed data mesh based on the recommended configuration.

2. The method of claim 1, wherein the knowledge graph represents a default state of a data mesh.

3. The method of claim 1 or 2, wherein generating the functional data mesh that identifies computational resources to perform the requested analyses includes assigning at least one data node to each analysis node.

4. The method of claim 1, 2 or 3, wherein a connection between a data node and an analysis node indicates that the computational resource represented by the data node performs the analysis represented by the analysis node; or wherein a connection between an analysis node and an ontology node indicates that the analysis represented by the analysis node is performed using the axiom represented by the ontology node.

5. The method of any of the preceding claims, wherein axioms of the data ontology include classes, relations, and properties.

6. The method of any of the preceding claims, wherein generating the functional data mesh includes applying one or more rules to identify a set of computational resources to support the requested analyses.

7. The method of any of the preceding claims, wherein validating the states of the functional data mesh comprises removing redundant data nodes from the functional data mesh.

8. The method of any of the preceding claims, the functional data mesh comprises, for each analysis node, a direct or indirect connection to at least one data node.

9. The method of any of the preceding claims, wherein validating the states of the functional data mesh comprises optimizing a cost function of the functional data mesh.

10. The method of any of the preceding claims, wherein the distributed data mesh includes connections between ontology nodes and analysis nodes.

11. The method of any of the preceding claims, wherein the distributed data mesh includes a minimal ontology to support the requested analyses.

12. The method of any of the preceding claims, wherein exporting the distributed data mesh comprises outputting a digital twin of the distribute data mesh to a runtime environment.

13. The method of any of the preceding claims, wherein the functional data mesh includes a subset of the data nodes of the knowledge graph.

14. A non-transitory computer-readable storage medium coupled to one or more processors and having instructions stored thereon which, when executed by the one or more processors, cause the one or more processors to perform the method defined in one or more of the preceding claims.

15. A system, comprising:
a computing device; and
a computer-readable storage device coupled to the computing device and having instructions stored thereon which, when executed by the computing device, cause the computing device to perform the method defined in one or more of claims 1 to 13.
